# EUROPEAN PATENT APPLICATION

(11) **EP 3 609 176 A1**
(43) Date of publication of application: **12.02.2020**
(21) Application number: 18188050.1
(22) Date of filing: 08.08.2018
(51) Int. Cl.: H04N 5/347, H04N 5/359

(54) **PIXEL WITH VARIABLE SIZE**

(71) Applicant: Gpixel Changchun Optotech Inc., Economical and Development Zone Changchun Jilin (CN)
(72) Inventor: WANG, Xinyang, Changchun, Jilin (CN); LI, Yang, Changchun, Jilin (CN); ZHOU, Quan, Changchun, Jilin (CN); MA, Cheng, Changchun, Jilin (CN)
(74) Representative: DenK iP

(57) **Abstract**

The present invention relates to a pixel array, sensor and method of driving a sensor array. Each pixel includes a sensing element for photo-generating charge carriers, a drain switch for draining charge carriers away, and a transfer switch for transferring charge carriers to an output node, for charge-signal conversion. The neighbouring pixels along a row or column forms a subset. The transfer switches of the pixels of a subset are operable, e.g. simultaneously operable, allowing control, e.g. simultaneous control, of charge carrier transfer. The array includes output to provide a single output signal (S) for each of the subsets, said signal being representative of a combination of charge carriers generated in each pixel of the subset not removed by operating the drain switch.

## Description

### Field of the invention

The present invention relates to the field of radiation sensing. More specifically it relates to pixel arrays and circuits thereof, and to methods of driving pixel arrays.

### Background of the invention

Radiation sensors, including optical sensors, usually include a number of units which generate a signal in response to radiation impinging on the sensitive part (sensitive element) of such sensors. Common sensing elements generate free charge carriers (electrons and holes) upon radiation impinging on detector material, usually a material including a doped semiconductor. The number of generated electron-hole pairs is proportional to the radiation level of the impinging radiation. The charge carriers are extracted from the sensing element by circuitry including transistors, such as MOS transistors, and other electronic elements, for conversion into an electrical signal (readout signal). The unit formed by the sensing element and its charge-extraction circuitry receives the name of "pixel". Radiation sensors typically include an array of pixels, and the amount of impinging radiation can be derived from the electrical signals obtained from each pixel of the array. For example, optical sensors obtain an image from the reconstruction of the amount of light impinging on each pixel of a pixel array. However, pixels have a limit of radiation that may produce a meaningful output, over which the output reaches a top limit and does not change. This is known as saturation. Radiation levels exceeding the saturation level may even affect nearby pixels, as charge carriers created in the pixel but not processed may escape and may be collected by surrounding sensing areas and circuitry, thus affecting their readout signal.

Saturation is also related to the dynamic range of the pixel. Usually, it is desirable to provide a sensor with high dynamic range, so as to provide meaningful output for low as well as for high radiation levels, thus obtaining high contrast. Dynamic range is limited if saturation occurs already for relatively low levels of radiation, and/or if the pixel presents high levels of dark noise. Dark noise can be reduced by for example improving or optimizing charge transfer from the sensing elements. However, in many applications, such as for instance spectroscopy applications, the sensor has to process high levels of radiation and still be capable of distinguishing signals from high background. Improving dark noise only presents limited benefits in these cases. Saturation is difficult to manipulate, because it is linked to physical properties of the sensing element itself.

### Summary of the invention

It is an object of embodiments of the present invention to provide a pixel array providing radiation sensing with tunable sensitivity, capacitance, and dynamic range, and a method of driving a pixel array.

In a first aspect, the present invention provides a pixel array, comprising a plurality of pixels logically organized in rows and columns. Each pixel comprises:
- at least one sensing element for converting impinging radiation into charge carriers,
- a drain switch for draining charge carriers away from the at least one sensing element, and
- a transfer switch for transferring charge carriers from the at least one sensing element to an output node for conversion of charge carriers into an output signal.
In the present invention, a plurality of neighboring pixels along a row or column forms a subset, and the transfer switches of the pixels of a subset are operable, e.g. simultaneously operable, so that control, e.g. simultaneous control, of charge carrier transfer is provided. The array further includes output means adapted to provide a single output signal (S) for each of the subsets, the output signal (S) being representative of a combination of charge carriers generated in each pixel of the subset which was not removed by operating the drain switch.

It is an advantage of particular embodiments of the present invention that parallel operation of the sensing elements can be provided, with simultaneous exposure time, by providing common control of the transfer means of all pixels. It is a further advantage that the total sensing area in each subset of pixels is selectable, by selectively draining away charge carriers.

It is an advantage of other embodiments of the present invention that parallel operation of the sensing elements can be provided, whereby not all transfer switches of a subset of pixels operate on the same time, to achieve for example different exposure time HDR by reading out twice.

In some embodiments of the present invention, the drain switch of a pixel in a subset of the array is simultaneously operable with the drain switch of at least one pixel of a different subset, so that simultaneous control of charge carrier drainage is provided for at least some pixels of different subsets.

It is an advantage of embodiments of the present invention that wiring is simplified by allowing common control of individual pixels of different subsets.

In particular embodiments of the array, the drain switch of a pixel in a subset is simultaneously operable with the drain switch of one pixel of each of the other subsets.

It is an advantage of embodiments of the present invention that wiring is further simplified and the width of all subsets can be simultaneously controlled.

In some embodiments of the present invention, each pixel in a subset further comprises an output node. The output nodes of all the pixels in that subset are connected to a single output means for performing charge to electrical signal conversion.

It is an advantage of embodiments of the present invention that a single output stage is needed per subset.

In particular embodiments, the output node of each pixel in a subset is connected with the output nodes of the other pixels in that subset directly, via a hardwired connection, thereby forming a common output node for that subset.

It is an advantage of embodiments of the present invention that a common or joined floating diffusion node is easily obtained per subset of pixels.

In alternative embodiments of the pixel array of the present invention, each pixel in a subset comprises an output node connected to an output means for performing charge to electrical signal conversion, and an output port of the output means of each pixel is connected to a signal combiner, for combining the obtained electrical signals of the pixels of the subset.

In some embodiments of the present invention, the drain switch comprises an anti-blooming gate. It is an advantage of embodiments of the present invention that blooming effects are avoided in case of saturation of the sensing element. Furthermore, a capability is created of emptying the sensing element at any point during integration by pulsing the gate.

In a further aspect, the present invention includes a sensor including the pixel array of embodiments of the first aspect of the present invention.

It is an advantage of embodiments of the present invention that a sensor can be provided wherein its sensing elements have variable sensing area. Such sensor may advantageously be used in spectroscopy applications.

In a further aspect, the present invention includes a method of operating pixels in a pixel array comprising a plurality of pixels logically organized in rows and columns, wherein a plurality of neighboring pixels along a row or column form a subset. The method comprises:
- selecting a number of pixels of each subset whose charge carriers are to contribute to an output signal, and draining away charge carriers of unselected pixels,
- subsequently transferring, e.g. simultaneously transferring, charge carriers from the pixels of the subset for readout,
- obtaining a single output signal representative of the combined charge carriers obtained from the pixels of the subset.

It is an advantage of particular embodiments of the present invention that parallel operation and simultaneous exposure time of a selectable sensing area can be obtained using only one transfer signal (common transfer signal). This, however, is not limiting, and different pixels may have different exposure times.

In embodiments of the present invention, selecting the number of pixels for charge draining is done simultaneously for a plurality of subsets.

It is an advantage of embodiments of the present invention that area selection can be obtained simultaneously for all the subsets.

In particular embodiments, simultaneously selecting the number of pixels of a plurality of subsets comprises selecting the same number of pixels in each subset of the plurality thereof.

It is an advantage of embodiments of the present invention that area selection can be obtained simultaneously for all subsets using a limited number of "width-selection" signals.

In embodiments of the present invention, selecting the number of pixels comprises activating a drain switch of one or more unselected pixels, for draining away charge carriers from said one or more pixels.

It is an advantage of embodiments of the present invention that protection against blooming and charge carrier saturation is provided.

In embodiments of the present invention, transferring, e.g. simultaneously transferring, charge carriers from the pixels of the subset for readout comprises transferring charge carriers to an output node in each pixel. The output nodes of the pixels in the subset are connected, so a charge carrier common to the pixels of the subset is obtained.

It is an advantage of embodiments of the present invention that readout, e.g. simultaneous readout, of the common charge carrier can be provided with a simple wiring layout and a limited or even single readout stage per subset.

In alternative embodiments, transferring, e.g. simultaneously transferring, charge carriers from the pixels of the subset for readout comprises converting charge carriers accumulated in each pixel of the subset into an electrical signal, and combining the electrical signals of the pixels of the subset, thus obtaining an electrical signal representative to the combined accumulated charges in the pixels of the subset.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates a prior art pixel with anti-blooming gate and transfer gate.
FIG 2 illustrates a prior art pixel including an output circuit for obtaining a signal from the charge carriers generated by impinging radiation.
FIG 3 illustrates a pixel array in accordance with embodiments of the present invention, showing part of two subsets of pixels in columns.
FIG 4 illustrates a pixel array in accordance with alternative embodiments of the present invention.
FIG 5 illustrates a pixel array in accordance with alternative embodiments of the present invention, where the columns may harbor more than one subset of pixels.
FIG 6 is a flowchart including steps of a method in accordance with embodiments of the present invention.
FIG 7 illustrates a sensor in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operating in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operating in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Radiation-sensitive elements can generate free charge carriers when radiation impinges on detector material. For example, photosensitive elements generate charge carriers (electrons and holes) when photons impinge thereon. The geometry and area of a photosensitive element are fixed parameters, which limits the flexibility of, among other parameters, the full well (FW) capacity. The FW capacity can be defined as the largest amount of charge carriers a pixel can hold before saturation; a larger amount does not give a meaningful signal and may result in signal degradation by blooming (where presence of charge carriers starts affecting circuit elements of the pixel and also adjacent pixels). Active pixel sensors (APS) and charge coupled devices (CCDs) are examples of pixels where FW capacity can be defined. Although the spatial resolution is reduced, large pixels can be used. Large pixels present greater FW capacity, thus offering higher dynamic range.

In several applications, for example in spectroscopic applications, it would be desirable to include large pixels, and to tune the sensitivity of the pixels, and/or to be able to define a tunable predetermined FW capacity.

The present invention relates to a pixel array and methods to operate it. The pixel array includes a plurality of pixels logically organized in columns and rows. The terms "column" and "row" are used to describe sets of array elements which are linked together. The linking can be in the form of a Cartesian array of rows and columns; however, the present invention is not limited thereto. As will be understood by those skilled in the art, columns and rows can be easily interchanged and it is intended in this disclosure that these terms be interchangeable. Also, non-Cartesian arrays may be constructed and are included within the scope of the invention. For example, the rows may be circles and the columns radii of these circles and the circles and radii are described in this invention as "logically organized" rows and columns. Accordingly the terms "row" and "column" should be interpreted widely. To facilitate in this wide interpretation, reference may be made to "logically organized rows and columns". By this is meant that sets of elements are linked together in a topologically linear intersecting manner; however, that the physical or topographical arrangement need not be so.

From the array, a plurality of neighboring pixels along a row (or column) forms a subset. A subset may, for example, include a whole column of a pixel array, thus obtaining as many subsets as columns in the array. However, this is not limiting, and a column may include more than one subset, as long as the subset includes a plurality of (neighboring) pixels. The pixels in a subset are connected in such a way that they can be all addressed, e.g. simultaneously addressed using a single signal per subset. Where in embodiments of the present invention reference is made to "common transfer signal", reference is made to this single addressing signal per subset. Further, each subset can provide a single output signal extracted from the combined charge carriers of the individual pixels in the subset. Thus, a single readout may be performed per subset, rather than per pixel. Alternatively, when not all transfer switches operate at the same time, different exposure times may be implemented, and for instance a double, triple, or limited number of readouts may take place.

Additionally, a number of "contributing" pixels can be selected in a subset, whose generated charge carriers shall contribute to the single output signal. The selection is done using a number of signals dependent on the number of selected pixels. For example, the number of required signals may be equal to the total number of pixels in the subset, minus the number of contributing pixels (in other words, the required number of signals in some applications may be equal to the number of pixels which shall not contribute to the output signal). Where in embodiments of the present invention reference is made to "selection signal" or "width-selection signal", reference is made to these signals which determine the number of contributing pixels. In some embodiments, this number can be the same for all subsets, so the same number of width-selection signals can be used for all the subsets, which simplifies connections and wiring. In some embodiments, width represents the amount of sensing area in the direction of the column of an array.

As stated above, the pixels of an array in accordance with embodiments of the present invention are organized in subsets, each subset giving a single output signal depending on the amount of selected or contributing pixels in each subset. Where in embodiments of the present invention reference is made to "metapixel", reference is made to one of these subsets of pixels which are arranged to give an output signal obtained from the combined charge carriers of pixels of said subset. The total sensing area of the metapixels can be selected by using width-selection signals, which determine the amount or number of pixels the sensing elements of which contribute to the output signal in each metapixel.

The fact that the number of contributing pixels can be selected in the subset, gives the result that the sensing area of the metapixel defined for that subset is selectable. This size-variable metapixel concept can allow the user to define different full well capacities, and/or allows tuning the sensitivity of the pixels. However, capacitance at readout can be the same although the FW capacitance is variable.. The FW capacity can be selected in accordance with the amount of radiation impinging on the subset. With a high level of impinging radiation, a high FW capacity can be selected, and with a low level, a lower FW capacity can be selected. Because a large pixel is more sensitive than a small pixel, sensitivity can be selectively increased.

The number of signals used to address pixels arranged into subsets can be much smaller than the number of pixels in the array, which improves simplicity, increases speed and reduces energy usage. The arrangement of connections and interconnections of the plurality of pixels is also simplified. In the particular case in which more than one subset is formed, the width of several subsets (thus, the sensing area of several metapixels) can be chosen simultaneously for all the subsets, for example by allowing the same width selection signals to address all subsets simultaneously.

In a first aspect, the present invention relates to an array of pixels logically organized in rows and columns, arranged in subsets, including connections for selecting predetermined contributing pixels, and including in each subset a connection for transferring charge carriers from the sensing elements of the subset, for obtaining a single output representative of the combined charge carriers of the contributing pixels of the subset.

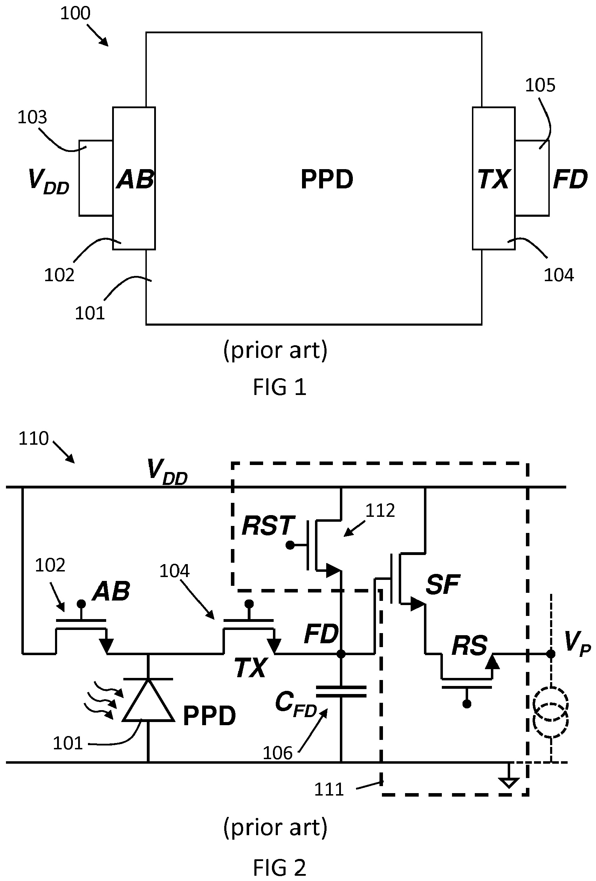

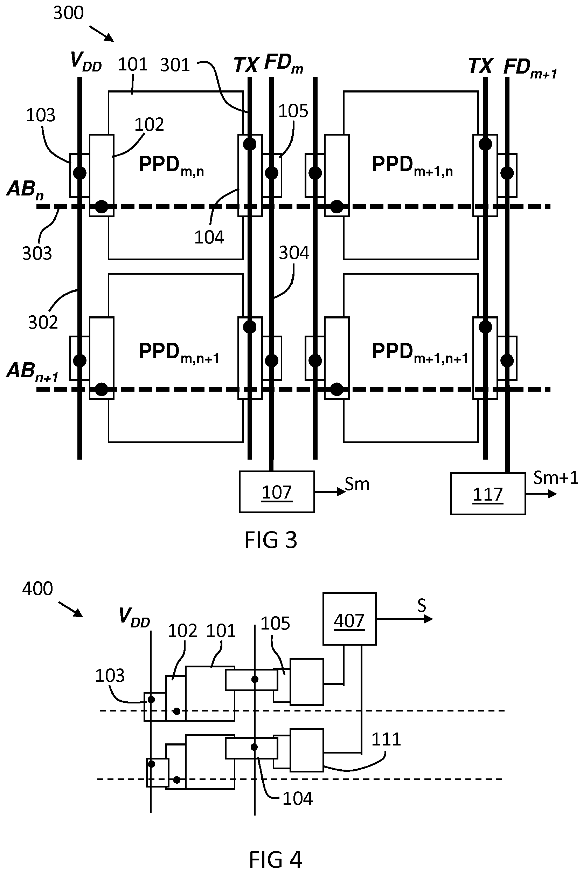

In the following, a prior art pixel and output means will be discussed with reference to FIG 1 and FIG 2. Then, an array of pixels in accordance with embodiments of the present invention will be discussed with reference to FIG 3.

FIG 1 shows part of a prior art pixel 100 which can be used in embodiments of the present invention as part of the pixel array. FIG 2 shows the schematic circuit representation 110 of the same pixel 100 of FIG 1, including output means 111, such as a readout stage (also known as output circuit or output stage).

The sensing element 101 may comprise a pinned photodiode PPD, but any other photosensitive element capable of generating and accumulating charge carriers can be used, such as a standard photodiode, photogate, SPAD, avalanche photodiode, etc.

Means for draining away charge carriers, such as a drain switch 102, or drain gate, is arranged between the sensing element 101 and a drain node 103, for example connected to a voltage supply V_{DD}, for removing charge carriers from the sensing element 101. For example, the drain switch 102 may comprise an "anti-blooming" AB gate or AB transistor. Among the functionalities of the drain switch 102, the following can be pointed out:
a) Blooming reduction. In the case of overexposure, when the pixel is saturated (e.g. the sensing element is saturated by charge carriers, e.g. electrons), any additional incoming radiation packet (e.g. photon) generates an additional charge carrier that can no longer be stored in the pixel. To avoid blooming effects, the AB transistor allows this additional charge carrier to be drained to the voltage supply V_{DD}.
b) Flushing charge carriers. At any given time during the integration time the drain switch 102, e.g. AB transistor, can be activated (e.g. by means of a voltage pulse at the AB gate), and the result is that the sensing element 101 will be emptied from generated charge carriers, flushing the charge carriers away to the voltage supply V_{DD}, without influencing any part of the rest of the pixel (for instance, it is not needed to transfer these charge carriers to a floating diffusion). After deactivation of the drain switch 102, e.g. by bringing the voltage applied to the AB gate back to a low value, the sensing element 101 starts integrating again. Reset of the sensing element 101 can be provided.
c) Draining charge carriers away. When the drain switch, e.g. AB transistor, is activated, e.g. biased at a high voltage, during the integration (e.g. during the whole integration period), the sensing element 101 has no longer the capability to store and hold the charge carriers, because any generated electron will automatically be drained to the voltage supply V_{DD}.

Some, or all, of these functions can be applied to different pixel and sensor structures and configurations, for example to a rolling shutter or global shutter sensor, for front-side or back-side illumination pixels, etc. Although any of said functionalities can be applied to the present invention, specifically charge carrier removal will be used for selecting the size and shape of a metapixel of the present invention, as will be seen below. The present invention, although explained in more detail with reference to AB transistors as drain switches, is not limited to AB transistors, and other methods and electronic elements for removing charge carriers or flushing them away from the sensing element 101 can be used. For example, anti-blooming can be performed outside of the plane of the array, with vertical configuration (e.g. a transistor with vertical configuration).

FIG 1 also shows transfer switch 104 arranged between the sensing element 101 and an output node 105, for example a floating diffusion FD node, for transferring charge carriers between the sensing element 101 and the node 105, upon activation of the switch 104. For example, a transfer gate TX can be used as transfer switch 104. A FD node is a node (which may be a portion of a semiconductor material) that connects to an output stage, e.g. to the gate of a source follower transistor SF. The FD node 105 usually includes a region of active semiconductor material, e.g. silicon, electrically isolated (e.g. by p-n junctions) from other nodes, for example from the sensing element 101. A capacitance can be defined for the FD node, usually selected to present high conversion gain. Because of its isolation, the potential of the node 105 depends on the amount of charge carriers present in, and/or transferred to the node 105.

Thus, charge carriers generated in a sensing element 101 can be transferred, via the transfer switch 104, to an output node 105 which may be a FD node, and the potential on the node 105 will change in accordance with the amount of charge carriers present therein. It is noted that this can be applied to APS or CCD. However, the present invention is not limited to a transfer gate and FD, and other means 104 for transferring charge carriers from the sensing element 101 to an output node 105, as long as they allow obtaining a signal representative of the charge carriers in said node 105, may also be used.

FIG 2 is a schematic representation 110 of the pixel circuit of FIG 1, further including output means 111 for reading said signal representative of charge carriers in the output node 105. In this particular case, the configuration is a known 5T pixel. The FD node 105, which has capacitance equivalent to the capacitor C_{FD} 106, accumulates charge carriers for readout.

The output means 111 may include circuitry which allows the charge carriers of the output node FD 105 to be converted to a voltage that can be buffered by the source follower transistor SF, so when the row selection transistor RS is active (by application of a corresponding selection signal at the gate thereof), the output port 108 of the source follower transistor SF connects to the column bus V_{P}. The output node 105 can be emptied of charge carriers; for example, the output node may also be connected to a voltage supply V_{DD} (the supply may be the same as the one connected to the drain node 103, which reduces complexity and number of sources in the array), for example via a reset stage 112, which may comprise a reset transistor RST.

In embodiments of the present invention, at least one subset (preferably a plurality of subsets) of elements as shown of FIG 1 or FIG 2 can be provided, including means for addressing, e.g. simultaneously addressing, their transfer switches 104. In a first case, the subset includes elements as shown in FIG 1, and a single output means 107, 117 may be provided per subset, for obtaining a signal representative of the combined charge carriers of (contributing) pixels of the subset. This is the embodiment shown in FIG 3. In an alternative case, the subset includes elements as shown in FIG 2, the output means 107, 117 may be provided per pixel and put on a column bus Vp, for thus extracting a combined signal representative of the charges of the contributing pixels. For example, the signal output of each pixel may be sent to a summing unit, such as an amplifier. More particularly, the output ports 108 of a plurality of pixels as in FIG 2, which may carry voltage signals representative of the charge carriers generated in the pixel by impinging radiation, may be connected to the input port or ports of a voltage adder. Presence of row selection means are preferred in this alternative, so a row select transistor RS is present per pixel for one column bus Vp rather than using one column bus Vp per pixel in the column. However, row selection means are optional, so instead of a row select transistor RS, a simple connection may be made between the output of the source follower SF and the column bus connected to the voltage adder.

FIG 3 shows an exemplary pixel array 300 in accordance with the first case, for example a CMOS pixel array including the pixels shown in FIG 1, logically organized in rows and columns. Each pixel includes at least a sensing element 101, a transfer switch 104 for extracting charge carriers from the sensing element 101, and a drain switch 102 for draining charge carriers away, so they do not contribute to the readout.

In the particular example of FIG 3, only four pixels are shown arranged in a 2x2 matrix. However, the present disclosure may be applied to any plurality of pixels forming an array with MxN pixels, where M and N are respectively the number of columns and rows, each being equal or higher than 2. The number M of columns may be larger than the number N of rows, for example. The values of M and N depend on manufacturing factors. For example, the sensor may be limited by wafer size. The number M of columns may be for example 4096 and the number N of rows 200. However, these numbers may be different in different arrays and applications. For spectrometer applications, in order to improve frequency resolution, the array can be adapted to obtain a high number M of columns. In particular embodiments, the pixel array may form a regular or irregular matrix.

In the embodiment illustrated in FIG 3, the pixels are grouped in subsets on a column basis. As, in the embodiment illustrated, the number of pixels in the array is limited, all N pixels on a single column form a subset. This, however, is not intended to be limiting for the present invention, and fewer than all pixels of a column might form a subset. The pixels of a subset can be addressed, e.g. simultaneously addressed, for readout; in FIG 3 the transfer switches 104 of all pixels in a subset are connected to each other by sharing a connection 301. In particular, the common transfer signal for controlling the transfer switches 104 can be shared directly between the transfer switches (e.g. transfer gates TX) of the pixels in a subset, together forming a metapixel. In FIG 3, the subset m and subset m+1 correspond to metapixel m and metapixel m+1, respectively. This can be obtained by physically connecting all the transfer switches 104 of a subset, for example by connecting together all gate connections of each transfer gate TX in the subset. For example, the connection 301 may be hard wired. The connection 301 may comprise a conductive track, or wire. For example, no extra transistors may exist between these connections. Additionally, in some embodiments of the present invention, each pixel per se does not need to include output means 111 for obtaining a signal per pixel (e.g. by charge carrier to voltage conversion), which simplifies the circuit and reduces energy consumption.

In some embodiments, the transfer switches 104 of some or all of the subsets can be addressed, e.g. simultaneously, for example by a same common transfer signal applied to some or all of the transfer switch connections 301. This means that, in particular embodiments, all subsets (and, thus, all metapixels) can be addressed simultaneously.

In FIG 3, only two rows n, n+1 are shown. However, any suitable number of pixels may be included in each subset. For simplification, it is considered that a subset contains a predetermined number N of pixels. The number of pixels whose charge carriers contribute to the total signal of the subset is equal to or lower than N, the maximum number of pixels available in the subset, and said number can be selected by selectively activating the drain switch 102, using a width selection signal. For the pixels for which the drain switch 102 is activated, the charge carriers will be drained to a drain node 103. Each drain node may be connected to a supply voltage V_{DD} (not illustrated in FIG 3). In the embodiment shown in FIG 3, the drain nodes 103 of all pixels in the subset are connected to each other, e.g. hard wired, by a single connection 302 as before.

In embodiments of the present invention, as shown in FIG 3, the width selection signal can be shared directly between the drain switches 102 (e.g. anti-blooming gates ABn) of pixels of several different subsets. Thus, the size of the sensing area of several metapixels can be controlled using at least n signals (0 ≤ n ≤ N).

In some embodiments, if each column comprises one subset only, and all subsets (all columns) include the same number N of pixels, the connections may be arranged so that n signals (0 ≤ n ≤ N) may be used to control the size of the sensing area of all the metapixels in the array. As with the case of the connections between transfer switches 104, this can be obtained by physically connecting all the drain switches 102, for example by connecting together all gate connections of each AB gate of pixels of different subset. For example, the connection 303 may be hard wired. For example, no extra transistors or switches may exist between these connections 303.

In embodiments using AB gates, their functionality, described with reference to FIG 1 and FIG 2, and advantages can also be applied to the case of the array of FIG 3. As pointed out earlier, however, the present invention is not limited by AB gates, and any other suitable drain means could be used.

The output signal provided by a metapixel is determined by the common contribution of all the selected pixels in their corresponding subset. This may be done e.g. by converting the amount of free charge carriers from each selected pixel into a local output signal and summing these local output signals. The alternative, preferred embodiment of FIG 3 shows a connection 304 between all the output nodes 105 of the pixels of a subset, thus generating an automatic combination of charge carriers. As before, the connection 304 may be hard wired.

When all the output nodes 105 of each pixel in a subset (in a metapixel) are connected, then all the charge carriers of the selected pixels are integrated in a common floating diffusion node, and all the charge carriers of the nodes of contributing pixels can be sent to a single output means 107, 117 shared by all the pixels in a subset, which provides a signal Sm, Sm+1 per metapixel representative of the contribution of all charge carriers generated in the pixels contributing to the metapixel. The charge carriers of unselected pixels are drained away (via their drain switch 102), so even if their transfer switch 104 is activated, no charge carriers from them are transferred to the output node 105, e.g. floating diffusion. It is an advantage that a single output means 107, 117 may be connected to the commonly connected output nodes 105 per metapixel (in particular embodiments, one single readout stage per column), thus reducing complexity of the array. Other advantages of connecting all the output nodes 105 of each pixel in a subset include providing a simple wiring. Moreover, all signals can be summed up together by charge domain binning, which is a noiseless method that gives a readout signal with high signal-to-noise ratio.

However, the above is not limiting for the present invention. FIG 4 shows a subset of a pixel array 400, each pixel in the array comprising an output means 111 (e.g. output circuit), as for instance shown in FIG 2. The subset illustrated is a column comprising two pixels. The invention, however, is not limited to including such small subsets. The discussion regarding the drain switches 102, drain nodes 103, sensing element 101 and transfer switches 104 to an output node 105 would be the same as before, except that the output nodes 105 of the pixels in a subset are not connected to each other, but to their output means 111. A single output signal per subset is obtained from all the signals obtained from the output means 111 of pixels of the subset, for example by connecting the outputs of the output means 111 of the pixels of a subset to a voltage adder 407, for summing all the signal voltages obtained by the pixels in the same subset and thus obtaining a single output signal S. However, the number of column lines, complexity of pixel electronics and power consumption are higher in this embodiment than in embodiments of FIG 3.

The number of subsets in the array defines the image resolution, at least in one direction, and in particular embodiments, this number of subsets may equal the number M of columns in the array. The number of pixels in each subset defines the total width of the metapixel, and hence determines the total sensing area, and in particular embodiments this number of pixels in a subset may equal the number N of rows in the array.

A metapixel with a width that can be varied, with potentially a large width in the direction of the columns (e.g. in vertical direction) can be obtained. The width can be chosen by appropriate setting of the drain switches 102. Not only can the width of the metapixel be chosen, but also its shape. For example, only the central portion of the metapixel may be used for collecting charge carriers, and so the drain switches 102 of pixels at the extremes of the subset (e.g. pixels 1 to p and q to N, being 1<p<q<N) may be kept active and draining charge carriers during exposure and integration. Or vice versa; the central portion of the metapixel may be kept "blinded", draining away any charge carriers generated by radiation impinging on the central pixels of the subset. In any case, information related to resolution is lowered, or even no resolution can be defined in one direction (e.g. vertical resolution is reduced or lost). In these cases, from a 2D pixel array, a 1D array of metapixels with variable sensing area can be defined.

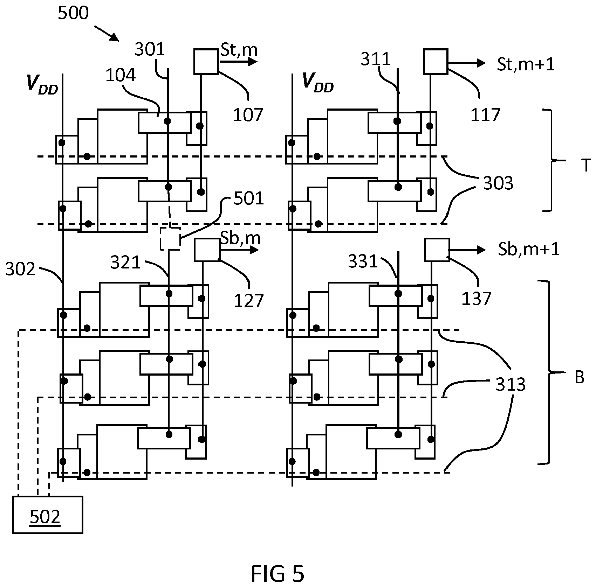

In some embodiments, however, it is possible to form a 2D array of metapixels, which can be used as a 2D sensor, as shown in the pixel array 500 of FIG 5. This can be done by connecting the transfer switches and arranging the output means so that a column of an array includes two or more subsets. For example, a single column can be divided in two portions including several pixels: a top portion T, a bottom portion B, each comprising two or more pixels (e.g. two in the top portion, three or more in the bottom portion, as shown in FIG 5), the pixels of each subset having interconnected transfer switches 104 per subset, for transferring charge carriers to each output node of the pixel, the output nodes of the pixels of a subset being interconnected as before. The connections between transfer switches are not done throughout the whole column, and now the transfer switches of pixels of each subset in a portion are controlled together. For example, this can be obtained by providing a separate connection 301, 311, 321, 331 per subset per portion, rather than per column, as in the case of FIG 3. The interconnected output nodes are in turn connected to an output means 107, 117, 127, 137 for each subset, for providing a single output (St,m; St,m+1; Sb,m; Sb,m+1) corresponding to each subset at the top portion and each subset at the bottom portion. However, the present invention is not limited to this configuration.

For example, other embodiments may include an optional switch 501 connecting the top connection 301 to the bottom connection 321, thus providing selectivity between readout of the whole column via a single output means 107 per column and readout of a top and bottom portions T, B of each column. In such embodiments, obtaining the output signal per subset and per portion can be done through an output means 107, 127 per portion, or by a single output means 107, sequentially per portion. The optional switch 105 may be for example a transistor.

The present example is not limiting, and a single column may be divided in more than two portions, e.g. three portions (e.g. a top, middle and bottom portion) or more, each portion including a subset with two or more pixels. Different columns may comprise a different number of subsets, and different subsets may comprise a different number of pixels.

The signals to control draining of charges, as before, may control drain switches of pixels from several subsets. For example, the number of drain control signals may be determined by the number of pixels in a portion of a column. In case of FIG 5, two signals are needed to control drain of pixels in the subsets of the top portion, so two connections 303 may be provided, and three to control drain of pixels in subsets of the bottom portion, so three connections 313 may be provided at the bottom. In any case, connections to a voltage supply may still be shared between subsets at the top and at the bottom portions, as shown by the connection 302 between drain nodes of FIG 5. The layout is simple and saves space, thus making effective use of the area on a wafer.

The present invention is not limited to such arrangements, and it is also applicable to other more irregular arrangements. Different subsets may include different number of pixels, so a first subset may include X pixels, a second subset may include Y pixels, Y being larger than X, etc. The drain switches of pixels of different subsets may be connected for several, but not all, subsets. For example, array arrangements different from matrices can be implemented.

A metapixel obtained in accordance with embodiments of the present invention presents high, selectable full well capacitance, which can be chosen in accordance with received radiation levels. This choice can be done manually, or automatically. For example, it can be made automatically by a controller 502 shown in FIG 5, optionally including a sampling circuit which may obtain the signal output of a pixel, e.g. at least one predetermined pixel in each subset, which samples the received radiation. The controller may be connected to the drain switches, e.g. to the AB gates, for opening the gate of pixels which do not contribute, based on the measurement of the sampling circuit.

If high radiation levels are detected, the controller 502 may decrease the number of participating pixels by connecting the drain switch, or vice versa, if the levels of charge carriers generated do not surpass a predetermined threshold, the number of participating pixels in the subset may be increased (by disconnecting drain switch). The same controller or a different controller may also be used to address the transfer gates of the pixels of each subset.

The present invention can be applied to optical sensing, for example for electronic imagers, spectroscopic sensors, etc. However, the present invention is not limited by the type of radiation. It can also be applied to the detection of radiation in other ranges in the electromagnetic spectrum (UV, IR radiation), or even to other types of radiation (e.g. particle radiation, for example to sensors for electron microscopy).

Particularly in spectroscopy it is desirable to provide wide pixels, due to the nature of the radiation and the information it carries.

In a second aspect of the present invention, a method of controlling a pixel array is disclosed. The method improves versatility, dynamic range, and full well capacity, by obtaining a signal dependent on the radiation impinging on subsets of pixels of the pixel array.

The method comprises addressing at least one subset of the plurality of pixels (for example, all subsets), for example with a transfer signal common to the pixels of the subset, and selecting the number of sensing elements participating in the total signal by selectively draining away charge carriers from a number of unselected pixels, for example through an AB gate. Once these steps are performed, the method comprises reading the total signal provided by all the pixels in the subset.

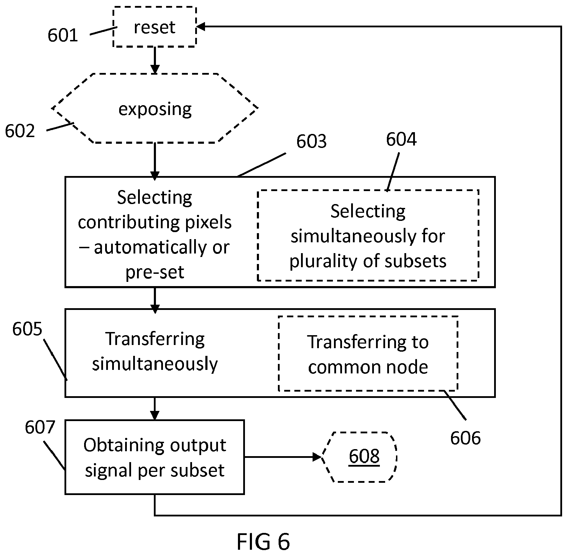

FIG 6 shows in more detail the steps of a method in accordance with embodiments of the present invention, as well as optional and preparatory steps (in dashed boxes). In a first step, the pixels may be emptied and reset 601 from non-equilibrium carriers (for example, the floating diffusion of the pixels is reset, and a reset level may be established). This can be done for all the pixels of a subset, for each subset. Subsequently or simultaneously, the sensing elements may be exposed 602 to radiation (e.g. light or any other suitable type of radiation), so charge carriers (e.g. electrons) are generated and accumulated in the pixels (e.g. in their sensing elements 101).

The method includes selecting 603 the number and position of contributing pixels whose charge carriers accumulated in the sensing elements will participate in the total signal. This is done by selectively draining away charge carriers from a number of unselected pixels at predetermined positions, for example by activation of their drain switch 102. Optionally, selecting 604 may be done simultaneously for pixels in several subsets (e.g. for a pixel in each subset). For example, several rows of pixels may be selected, and the charge carriers of pixels of the rest of rows may be simultaneously drained away. This step determines the amount of sensing area of the metapixel corresponding to a subset. If a pixel has a pixel area A, and n pixels are selected, the total sensing area of the metapixel will be nxA. The FW capacitance can thus be selected for the metapixel.

In a practical example with reference to FIG 3, the AB lines are selectable by rows, for a plurality of subsets. If ABₙ is put to a low voltage and ABₙ₊₁ is biased at a high voltage, the pixels in row n will be selected 603 to participate in the sensitivity of each of the subsets, but the pixels in row n+1 will not be selected, because the high voltage on ABₙ₊₁ will not allow the pixels in row n store any charge carriers.

Thus, the width (and shape) of the metapixel can be selected without changing the capacitance of the output node of each pixel. The selection may be automatic, e.g. by pre-sampling the amount of radiation and deciding how much sensing area will be needed, or it may be pre-set or set by a user, for example manually.

After the step of selecting 603, 604 the contributing pixels, the method includes transferring, e.g. simultaneously transferring 605, the packets of charge carriers of a subset of pixels for readout, e.g. to an output node 105. Simultaneously transferring packets of charge carriers can be done by applying a common transfer signal to all the transfer switches 104 of the pixels in a same subset, including those pixels with no charge carriers being accumulated (because for example charge carriers were drained away via the drain switch). Alternatively, different pixels may get different exposure times, and charge carriers of pixels having a same exposure time may be transferred simultaneously, while charge carriers of pixels having another exposure time may be transferred at another moment in time. This way, not all transfer switches operate at the same time, and a limited number of readout actions may take place. In any case, only selected pixels will contribute to read out charge, even if all pixels (selected and unselected pixels) are addressed with the, possibly but not necessarily common, transfer signal. The method may include optionally transferring 606 the accumulated charge carriers, e.g. simultaneously, to a common output node 105. This can for example be done by transferring the charges accumulated in the sensing element of a pixel to the FD of that pixel, where the FDs of all the pixels forming a subset (e.g. all adjacent pixels in a column, or in a portion thereof) are interconnected.

After the pixel selection and transfer of charges, the method includes obtaining 607 a single output signal, which is representative of the combined charges obtained from the pixels of the subset. For example, obtaining 607 the single signal may comprise collecting all charges from contributing pixels in a common output node (e.g. common FD node) and obtaining an output voltage signal representative of the combined transferred charges - as for example illustrated for an embodiment in FIG 3. However, as it has been seen earlier, the method may alternatively include providing an output voltage signal per pixel of a subset, and from these output voltage signals obtaining 607 a single output signal for the subset - as for example illustrated for an embodiment in FIG 4. It is noted that only those pixels selected 603, 604 in the previous steps will give an output signal representative of the charges accumulated due to radiation exposure. In some embodiments, the difference between the reset level and the potential shift of the common FD node determines the signal voltage levels. Thus, all pixels of a subset may operate fully in parallel, so their exposure time starts and ends at the same time, because the transfer is common and simultaneous for all pixels of a subset. In alternative embodiments some pixels of a subset may operate in parallel, with their exposure time starting and ending at the same time, while other pixels of the subset also operate in parallel, with their exposure time also starting and ending at the same time, but at a different time than for the other pixels of the subset.

The method may comprise displaying 608 the output signal of each subset, for example in a display screen, printer, etc. The method may also start again, e.g. by resetting 601 the pixels, thus forming a cycle.

The present invention is applicable to CMOS pixels (e.g. APS), but also to other types of sensing units. It can be used spectroscopic related applications, where pixels that have a large size in one direction (e.g. in vertical direction) are desirable. The size-variable metapixel in accordance with embodiments of the present invention can allow the user to define different full well capacities, and/or can allow tuning the sensitivity of the pixels, without actually changing the capacitance of the output node.

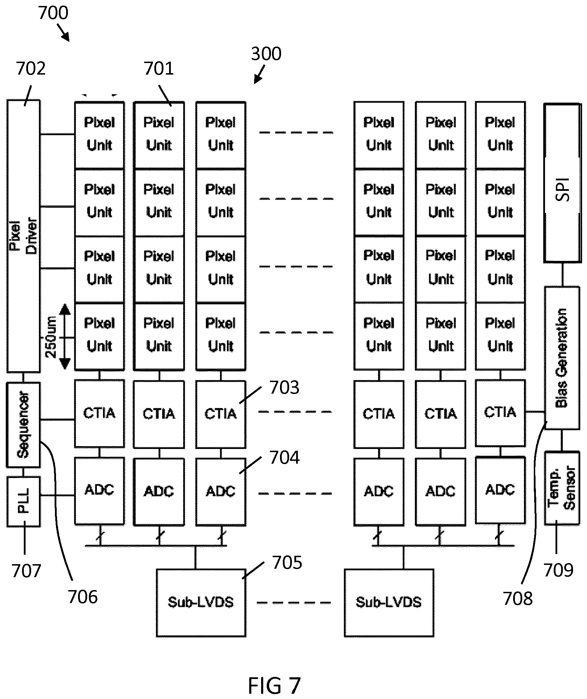

The present invention further includes a sensor for sensing radiation, especially for (but not limited to) spectroscopic applications, including a pixel array in accordance with embodiments of the first aspect, and/or which can be used in accordance with embodiments of the second aspect of the present invention. FIG 7 shows a sensor 700 including a pixel array according to embodiments of the first aspect of the present invention, comprising pixel units 701 connected in columns. Each pixel unit 701 may include a pixel as shown in FIG 1 or FIG 2. They may be included in an area of a semiconductor material, for example and area with a side 250 µm long on a wafer. The pixels of each row may be connected to a pixel driver 702, which can be used to control the drain of pixels, for example of pixels in the same row. Each column may be connected to an amplifier, for example a trans-impedance amplifier (TIA) such as a capacitive TIA (CTIA) 703, which can be used to add the charges from the pixels selected for contribution per column (CTIA is a charge to voltage conversion). The contribution of charges of these selected pixels can be sent to an analog to digital converter ADC 704. The output of the ADC 704 can be connected to a low-voltage data signal unit, sub-LVDS 705, or the like. Further elements may be included. An optional controller for automatic control of the AB gates may be included in the pixel driver 702, for example. A sequencer 706 and phase locked loop (PLL) 707 for control of timing and signal transfer and readout can be included, as well as a serial periphery interface bus SPI and bias generation means 708 for the CTIA of each column. For example, also compensation means can be included, such as temperature sensors 709 connected to the bias generation means 708, for correcting drift of the bias of the CTIA, for example, due to changes of temperature.

## Claims

1. A pixel array (300, 400, 500), comprising a plurality of pixels (100, 110) logically organized in rows and columns, each pixel (100, 110) comprising:
- at least one sensing element (101) for converting impinging radiation into charge carriers,
- a drain switch (102) for draining charge carriers away from the at least one sensing element (101), and
- a transfer switch (104) for transferring charge carriers from the at least one sensing element (101) to an output node for conversion of charge carriers into an output signal,
wherein a plurality of neighboring pixels along a row or column forms a subset,
the transfer switches (104) of the pixels of a subset being operable, so that control of charge carrier transfer is provided, and
wherein the array further includes output means (107, 117, 127, 137, 407), the output means being adapted to provide a single output signal (S) for each of the subsets, the output signal (S) being representative of a combination of charge carriers generated in each pixel of the subset not removed by operating the drain switch (102).

2. The pixel array (300, 400, 500) of the previous claim, wherein the drain switch (102) of a pixel in a subset is simultaneously operable with the drain switch of at least one pixel of a different subset, so that simultaneous control of charge carrier drainage is provided for pixels of different subsets.

3. The pixel array (300, 400, 500) of claim 2, wherein the drain switch (102) of a pixel in a subset is simultaneously operable with the drain switch of one pixel of each of the other subsets.

4. The pixel array (300, 500) of any one of the previous claims, wherein each pixel (100) in a subset further comprises an output node (105), the output nodes (105) of all the pixels in the subset being connected to a single output means (107, 117, 127, 137) for performing charge to electrical signal conversion.

5. The pixel array (300, 500) of claim 4, wherein the output node (105) of each pixel (100) in a subset is connected with the output nodes of the other pixels in that subset directly via a hardwired connection (304), thereby forming a common output node for that subset.

6. The pixel array (400) of any one of claims 1 to 3, wherein each pixel (100) in a subset comprises an output node (105) connected to an output means (111) for performing charge to electrical signal conversion, an output port of the output means (111) of each pixel being connected to a signal combiner for combining the obtained electrical signals of the pixels of the subset.

7. The pixel array (300, 400, 500) of any one of the previous claims, wherein the drain switch (102) comprises an anti-blooming gate.

8. A sensor (700) including the pixel array (300, 400, 500) of any of the previous claims.

9. A method of operating pixels in a pixel array (300, 400, 500) comprising a plurality of pixels logically organized in rows and columns, wherein a plurality of neighboring pixels along a row or column form a subset, the method comprising
- selecting (603, 604) a number of pixels of each subset whose charge carriers are to contribute to an output signal, and draining away charge carriers of unselected pixels,
- subsequently transferring (605, 606) charge carriers from the pixels of the subset for readout,
- obtaining (607) a single output signal representative of the combined charge carriers obtained from the pixels of the subset.

10. The method of the previous claim, wherein selecting the number of pixels for charge draining comprises simultaneously selecting (604) pixels of a plurality of subsets.

11. The method of claim 10, wherein selecting (604) the number of pixels of a plurality of subsets comprises selecting (604) the same number of pixels in each subset of the plurality thereof.

12. The method of any of claims 9 to 11, wherein selecting (603, 604) the number of pixels comprises activating a drain switch of one or more unselected pixels for draining away charge carriers from said one or more pixels.

13. The method of any one of claims 9 to 12, wherein transferring (606) charge carriers from the pixels of the subset for readout comprises transferring charge carriers to an output node in each pixel, the output nodes of the pixels in the subset being connected thus obtaining a charge carrier common to the pixels of the subset.

14. The method of any one of claims 9 to 12, wherein transferring (606) charge carriers from the pixels of the subset for readout comprises converting charge carriers accumulated in each pixel of the subset into an electrical signal, and combining the electrical signals of the pixels of the subset, thus obtaining an electrical signal representative to the combined accumulated charges in the pixels of the subset.
